(19)

Europäisches Patentamt
European Patent Office
Office européen des brevets

(11) **EP 2 618 225 A1**

(12) **EUROPEAN PATENT APPLICATION**

(43) Date of publication:
24.07.2013  Bulletin 2013/30

(51) Int Cl.:
*G03H 1/08* (2006.01)

(21) Application number: 13151447.3

(22) Date of filing: 16.01.2013

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 20.01.2012  KR 20120006784

(71) Applicant: Samsung Electronics Co., Ltd
Gyeonggi-do 443-742 (KR)

(72) Inventors:
• Lee, Seok
445-724 Gyeonggi-do (KR)
• Nam, Dong Kyung
446-592 Gyeonggi-do (KR)
• Wey, Ho Cheon
463-705 Gyeonggi-do (KR)

(74) Representative: Hylarides, Paul Jacques et al
Arnold & Siedsma
Sweelinckplein 1
2517 GK The Hague (NL)

(54) **Apparatus and method of generating hologram from an initial hologram pattern**

(57)     An apparatus and method of generating a hologram based on hologram pattern reuse includes a pattern generating unit (101, 801) arranged to generate an initial hologram pattern (401, 601, 701) reconstructing a three-dimensional (3D) object (104, 203, 403, 603, 703) in a 3D space, and a pattern transformation unit (102, 802) arranged to determine a transformation hologram pattern (402, 602, 702) by transforming the generated initial hologram pattern. The apparatus and method may further include a hologram reproducing unit (103, 803) to reproduce a video hologram (105) using as temporal frames the initial hologram pattern (401, 601, 701) and the transformation hologram pattern (402, 602, 702).

FIG. 1

100

104

**3D OBJECT**

101
**PATTERN GENERATING UNIT**

102
**PATTERN TRANSFORMATION UNIT**

103
**HOLOGRAM REPRODUCING UNIT**

105
**VIDEO HOLOGRAM**

EP 2 618 225 A1

**Description**

BACKGROUND

1. Field

The following description relates to an apparatus and method of generating a hologram, and more particularly, to an apparatus and method of generating a hologram quickly, using an initial hologram previously generated by transforming an initial hologram pattern.

2. Description of the Related Art

A conventional three-dimensional (3D) display such as a stereo 3D display or a multiview 3D display, for example, enables a viewer to recognize a depth by providing information about different viewpoints to both eyes of the viewer. However, because a limited number of viewpoints are used to display an object, a depth of the object perceived by a human is different from a position at which light is actually generated. Consequently, the 3D display has a disadvantage of causing visual fatigue for the viewer.

Accordingly, a hologram reproducing apparatus has been introduced as a replacement for the multiview 3D display. Because the hologram reproducing apparatus may generate lights in all directions at an actual position of an object perceived by a human, an ideal 3D display that may have an unlimited number of viewpoints and may not cause visual fatigue may be realized. Although the hologram reproducing apparatus has the aforementioned advantage when compared to the multiview 3D display, there are a great number of problems to be resolved for commercialization of the hologram reproducing apparatus.

The most serious problem among the various problems is a considerable amount of calculation to be performed when a hologram pattern is generated to reproduce a hologram. In order to reproduce a hologram, a wavelength distribution of light on a plane of the hologram reproducing apparatus, such as a spatial light modulator (SLM), for example, may be calculated based on visual information viewed with an eye of a human, and a two-dimensional (2D) fringe pattern corresponding to the hologram pattern may be generated based on the calculated wavelength distribution. Most of all, the aforementioned process may be performed for all 3D points included in an object to be represented to be a hologram. Here, an overall amount of calculation for generating the hologram pattern may be proportional to a number of the 3D points included in the object, a number of pixels of the SLM, and a number of frames per unit time.

Thus, there is a need for an apparatus for generating a hologram that may resolve problems regarding an amount of calculation to be performed, and also may be applicable to a video hologram in which a shape of an object is changed as time passes.

SUMMARY

The foregoing and/or other aspects are achieved by providing an apparatus for generating a hologram, the apparatus including a pattern generating unit to generate an initial hologram pattern corresponding to a three-dimensional (3D) object in a 3D space, and a pattern transformation unit to determine a transformation hologram pattern by transforming the generated initial hologram pattern.

The apparatus may further include a hologram reproducing unit to reproduce a video hologram using the initial hologram pattern and the transformation hologram pattern.

The foregoing and/or other aspects are achieved by providing a method of generating a hologram, the method including generating an initial hologram pattern corresponding to a 3D object in a 3D space, and determining a transformation hologram pattern by transforming the generated initial hologram pattern.

The method may further include reproducing a video hologram using the initial hologram pattern and the transformation hologram pattern.

The example embodiments may include an apparatus and method that may reduce an amount of calculation performed, for each temporal frame, when a hologram pattern is generated, by generating a transformation hologram pattern through transforming an initial hologram pattern.

Additional aspects of embodiments will be set forth in part in the description which follows and, in part, will be apparent from the description, or may be learned by practice of the disclosure.

BRIEF DESCRIPTION OF THE DRAWINGS

The patent or application file contains at least one drawing executed in color. Copies of this patent or patent application publication with color drawings will be provided by the Office upon request and payment of the necessary fee. These and/or other aspects will become apparent and more readily appreciated from the following description of embodiments, taken in conjunction with the accompanying drawings of which:

FIG. 1 illustrates an apparatus for generating a hologram according to example embodiments;
FIG. 2 illustrates a process of generating an initial hologram pattern according to example embodiments;
FIG. 3 illustrates a process of generating a point hologram to generate an initial hologram pattern according to example embodiments;
FIG. 4 illustrates a process of adjusting a phase of a pixel included in an initial hologram pattern according to example embodiments;
FIG. 5 illustrates a relationship between an object and hologram pattern in a case in which a phase is adjusted according to example embodiments;
FIG. 6 illustrates a process of changing a position of a pixel included in an initial hologram pattern according to example embodiments;
FIG. 7 illustrates a process of rotating a pixel included in an initial hologram pattern according to example embodiments; and
FIG. 8 illustrates a method of generating a hologram according to example embodiments.

DETAILED DESCRIPTION

Reference will now be made in detail to embodiments, examples of which are illustrated in the accompanying drawings, wherein like reference numerals refer to like elements throughout. Embodiments are described below to explain the present disclosure by referring to the figures.

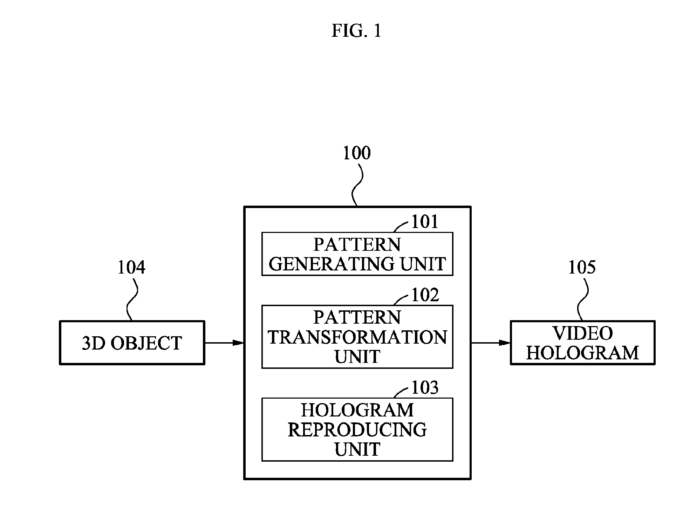

FIG. 1 illustrates an apparatus 100 for generating a hologram according to example embodiments.

Referring to FIG. 1, the apparatus 100 may include a pattern generating unit 101 and a pattern transformation unit 102. The apparatus 100 may further include a hologram reproducing unit 103.

The pattern generating unit 101 may generate an initial hologram pattern corresponding to a three-dimensional (3D) object 104 in a 3D space. For example, the pattern generating unit 101 may generate a point hologram corresponding to a 3D point included in the 3D object 104, and may generate an initial hologram pattern using the generated point hologram. In this instance, the point hologram may be generated using a fringe pattern that may be generated based on a distance from a hologram plane to a 3D point included in the 3D object 104.

As described herein, a 3D point may include a two-dimensional (2D) point. In this instance, the initial hologram pattern may correspond to a 2D hologram pattern.

The pattern transformation unit 102 may determine a transformation hologram pattern by transforming the initial hologram pattern. Here, the transformation hologram pattern and the initial hologram pattern may be included in temporally different frames. According to exemplary embodiments, a transformation hologram pattern at a time of t + 1 may be generated by transforming an initial hologram pattern generated at a time of t. That is, because a previously generated initial hologram pattern may be used, instead of generating a new hologram pattern at a time t + 1, an amount of calculation may be reduced.

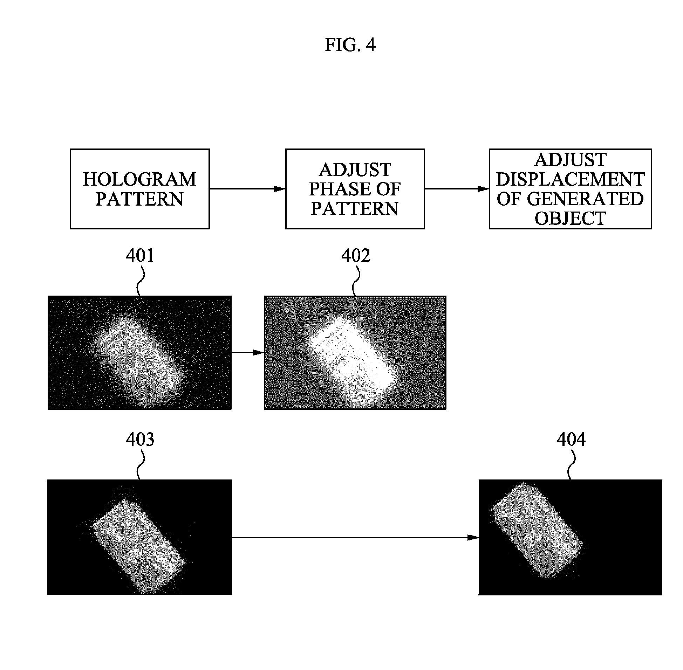

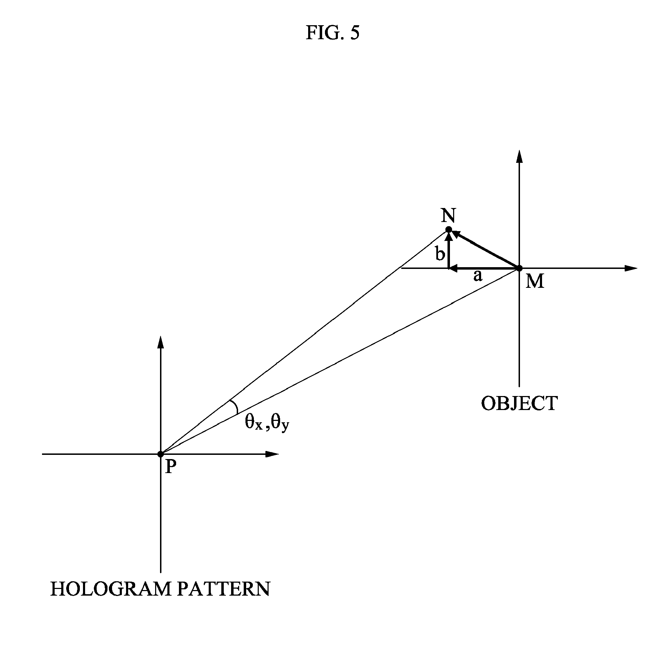

As an example, the pattern transformation unit 102 may determine the transformation hologram pattern by changing a phase of a pixel included in the initial hologram pattern. A process of changing the phase of the pixel will be described in detail with reference to FIGS. 4 and 5.

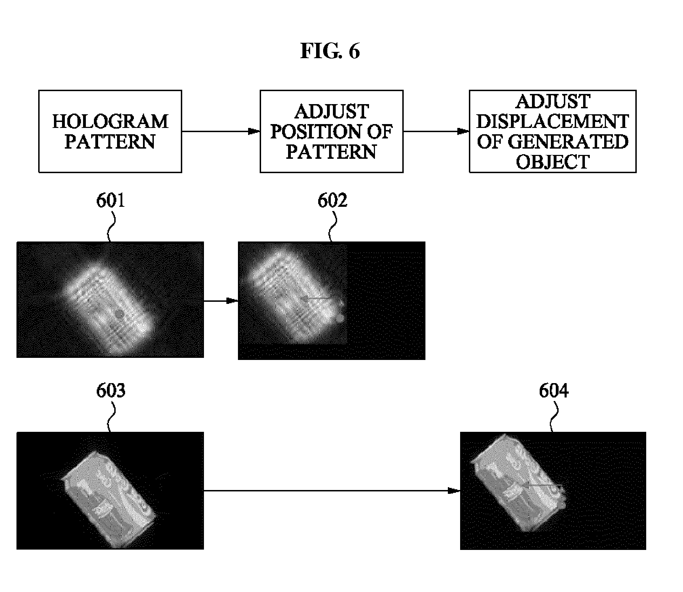

As another example, the pattern transformation unit 102 may determine the transformation hologram pattern by changing a position of a pixel included in the initial hologram pattern. A process of changing the position of the pixel will be described in detail with reference to FIG. 6.

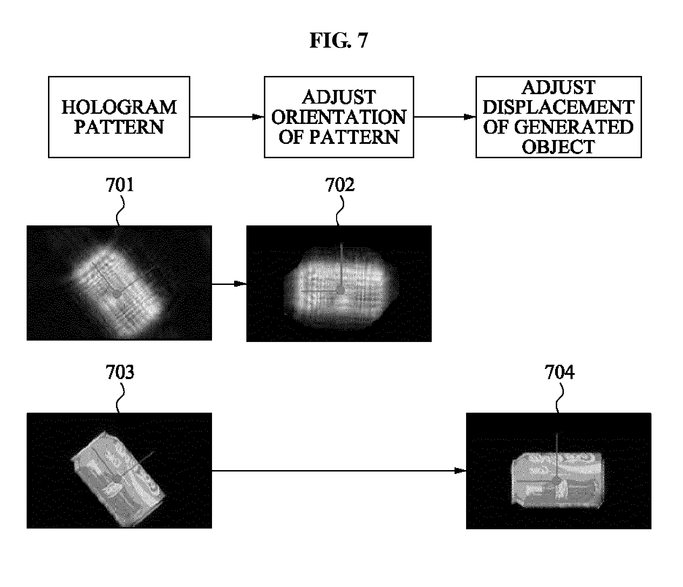

As still another example, the pattern transformation unit 102 may determine the transformation hologram pattern by rotating a pixel included in the initial hologram pattern. A process of rotating the pixel will be described in detail with reference to FIG. 7.

According to exemplary embodiments, the transformation hologram pattern may be derived from the initial hologram pattern, by using at least one of the process of changing the phase of the pixel, the process of changing the position of the pixel, and the process of rotating the pixel.

The hologram reproducing unit 103 may reproduce a video hologram 105 using the initial hologram pattern and the transformation hologram pattern. That is, the hologram reproducing unit 103 may reproduce a transformation hologram pattern that may be temporally successive to an initial hologram pattern, thereby reproducing a video hologram in which the 3D object 104 may move.

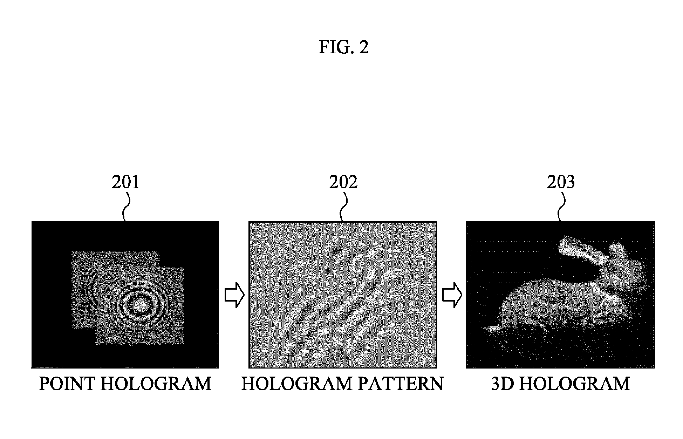

FIG. 2 illustrates a process of generating an initial hologram pattern according to example embodiments.

An apparatus for generating a hologram may calculate a light distribution for each pixel, for a plurality of pixels existing on a plane of a spatial light modulator (SLM). Here, a light distribution for a pixel may be represented by a pixel value of the pixel. The hologram generating apparatus may generate a point hologram 201 corresponding to a 3D point included in a 3D object, using the calculated light distribution for each of the plurality of pixels.

For example, when the 3D object includes K 3D points, and the SLM includes N x N pixels, the hologram generating apparatus may calculate a light distribution for each of the N x N pixels, for each of the K 3D points. That is, the hologram generating apparatus may generate K 3D point holograms, each including N x N pixels having light distributions.

The hologram generating apparatus may generate a hologram pattern 202 using the point hologram 201. For example, the hologram generating apparatus may generate the hologram pattern 202 by accumulating the K point holograms. In this instance, each of the plurality of pixels included in the hologram pattern 202 may have a pixel value.

The hologram generating apparatus may generate a 3D hologram 203 using the hologram pattern 202. Here, when sub-sampling is used, only a portion of the plurality of pixels included in the hologram pattern 202 may have pixel values. When full sampling is used, all of the plurality of pixels included in the hologram pattern 202 may have pixel values. Accordingly, when the 3D hologram 203 is generated using full sampling, an amount of calculation may increase but a better image quality may be provided, compared to a case in which the 3D hologram 203 is generated using sub-sampling.

The hologram pattern 202 derived in the process of FIG. 2 may be derived to derive an initial hologram pattern at a time of t. After the time of t, a transformation hologram pattern at a time of t + 1 may not be generated through the process of FIG. 2, but, instead, may be derived by transforming the initial hologram pattern.

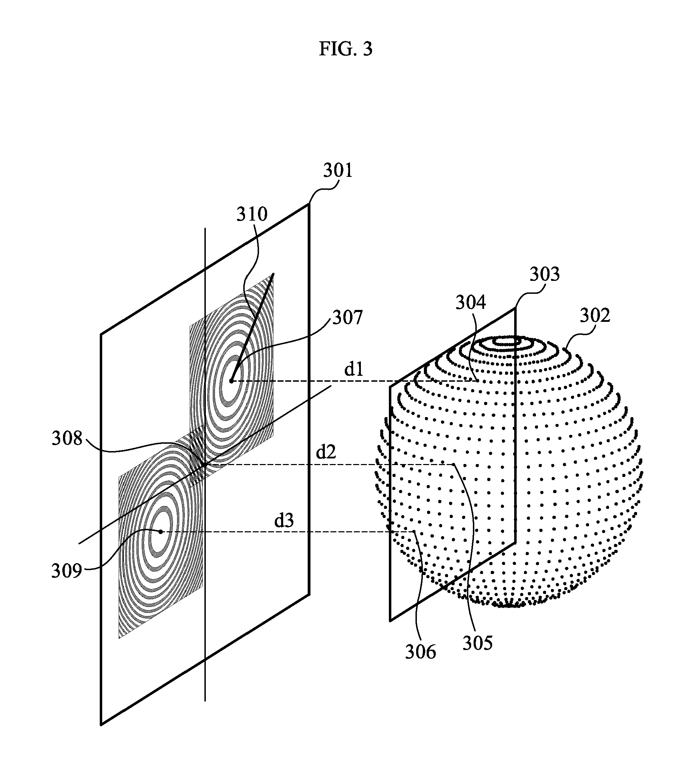

FIG. 3 illustrates a process of generating a point hologram to generate an initial hologram pattern according to example embodiments.

An apparatus for generating a hologram may generate a fringe pattern corresponding to all 3D points included in a 3D object in a 3D space. Also, the hologram generating apparatus may generate a fringe pattern corresponding to a representative 3D point, corresponding to a portion of the 3D points included in the 3D object.

As an example, when an initial fringe pattern corresponding to all 3D points is generated, the hologram generating apparatus may generate a fringe pattern corresponding to each 3D point included in a depth layer of a 3D object 302, based on a distance from the each 3D point and a hologram plane 301. Here, the fringe pattern may correspond to a point hologram of a 3D point included in the 3D object 302.

For example, a fringe pattern corresponding to each of all 3D points included in an identical depth layer 303 may be generated. Here, a depth layer may refer to a layer including at least one 3D point having an identical distance from the hologram plane 301, among 3D points included in a 3D object. Referring to FIG. 3, on the hologram plane 301, a distance d1 between a pixel 307 and a first 3D point 304, a distance d2 between a pixel 308 and a second 3D point 305, and a distance d3 between a pixel 309 and a third 3D point 306 may be identical. Here, the pixel 307, the pixel 308, and the pixel 309 may refer to central pixels of fringe patterns.

The hologram generating apparatus may generate a fringe pattern of each of the first 3D point 304, the second 3D point 305, and the third 3D point 306 using Equation 1.

[Equation 1]

$$O(\xi,\eta) = \frac{z}{j\lambda} \int\int_{-\infty}^{\infty} O(x,y) \frac{\mathrm{e}^{jkd_{01}}}{d_{01}^2} dxdy, \qquad d_{01} = \sqrt{(\xi-x)^2 + (\eta-y)^2 + z^2}$$

In Equation 1, $O(\xi,\eta)$ denotes a light distribution for a pixel at coordinates $(\xi,\eta)$ among pixels included in the hologram plane 301. $O(x,y)$ denotes a light distribution for a 3D point at coordinates $(x, y)$ among the 3D points. The 3D points include the first 3D point 304, the second 3D point 305, and the third 3D point 306, that are included in the 3D spatial object, k denotes a wave number of a reference wave, and $k = \frac{2\pi}{\lambda}$. $(\xi,\eta,z)$ denotes position coordinates of a pixel corresponding to each of the first 3D point 304, the second 3D point 305, and the third 3D point 306, among the plurality of pixels included in the hologram plane 301, and may correspond to information about position coordinates of each of the plurality of pixels included in the SLM.

$\xi$ denotes an abscissa of the pixel, $\eta$ denotes an ordinate of the pixel, and z denotes a depth value of the pixel. Similarly, $(x,y)$ denotes information about position coordinates of each of the first 3D point 304, the second 3D point 305, and the third 3D point 306, where x denotes an abscissa of each of the first 3D point 304, the second 3D point 305, and the third 3D point 306, and y denotes an ordinate of each of the first 3D point 304, the second 3D point 305, and the third 3D point 306. $d_{01}$ denotes a distance from a pixel at coordinates $(\xi,\eta,z)$ on the hologram plane 301 to a 3D point at coordinates $(x, y)$. $e^{jkd_{01}}$ denotes a phase, which may have periodicity and symmetry based on the origin of transformation coordinates.

In Equation 1, the hologram plane 301 may correspond to a plane of an apparatus for displaying or reproducing a hologram, and may match a plurality of pixels included in the SLM. Accordingly, a plurality of pixels included in the hologram plane 301 may refer to the plurality of pixels included in the SLM.

The hologram reproducing apparatus may generate a first fringe pattern 310 corresponding to the first 3D point 304. Here, the first fringe pattern 310 may include pixels positioned in a diagonal direction based on the pixel 307 at a position corresponding to the first 3D point 304. In an identical manner, the hologram reproducing apparatus may generate a second fringe pattern corresponding to the second 3D point 305, and may generate a third fringe pattern corresponding to the third 3D point 306.

Here, the pixels positioned in the diagonal direction of each of the pixel 307, the pixel 308, and the pixel 309 may refer to reference pixels. For example, reference pixels may refer to pixels positioned in upper, lower, left, and right directions based on the pixel 307 at a position corresponding to the first 3D point 304. Accordingly, the hologram reproducing apparatus may generate a fringe pattern by performing a calculation based on Equation 1, only on reference pixels positioned in a predetermined direction based on a central pixel at which a 3D point may meet at right angles to the hologram plane 301, thereby reducing an amount of calculation to be performed when a hologram pattern is generated.

FIG. 4 illustrates a process of adjusting a phase of a pixel included in an initial hologram pattern according to example embodiments.

Referring to FIG. 4, it may be assumed that an initial hologram pattern 401 at a time of t, corresponding to a 3D object, is generated. An apparatus for generating a hologram may generate a transformation hologram pattern 402 by adjusting a phase of a pixel included in the initial hologram pattern 401. A 3D hologram 403 based on the initial hologram pattern 401 at the time of t may be changed to a 3D hologram 404 based on the transformation hologram pattern 402 at a time of t + 1. Accordingly, the 3D object positioned in a center of a screen may be moved to an upper left area of the screen. In other words, a displacement of a generated object may be adjusted as a result of adjusting a phase of a pattern.

FIG. 5 illustrates a relationship between an object and hologram pattern in a case in which a phase is adjusted according to example embodiments.

Referring to FIG. 5, when a phase of a pixel P included in a hologram pattern is changed by a value of θ, a 3D object may be regarded as being moved by a value of a on an x axis, and by a value of b on a y axis, which may be expressed by Equation 2.

[Equation 2]

$$U(x, y)\exp(-j2\pi(ax + by)/\lambda z)$$

Equation 2 indicates a result of moving a 3D object at a depth z by a value of a on the x axis, and by a value of b on the y axis, by changing a phase of a pixel included in a hologram pattern on a plane of an SLM. $U(x,y)$ denotes a 3D point on the 3D object.

FIG. 6 illustrates a process of changing a position of a pixel included in an initial hologram pattern according to example embodiments.

It may be assumed that an initial hologram pattern 601 at a time of t, corresponding to a 3D object, is generated. An apparatus for generating a hologram may generate a transformation hologram pattern 602 by changing a position of a pixel included in the initial hologram pattern 601. A 3D hologram 603 based on the initial hologram pattern 601 at the time of t may be changed to a 3D hologram 604 based on the transformation hologram pattern 602 at a time of t + 1. Accordingly, the 3D object positioned in a center of a screen may be moved to an upper left area corner of the screen. In other words, a displacement of a generated object may be adjusted as a result of adjusting a position of a pattern.

In FIG. 6, the process of generating the transformation hologram pattern 602 may be derived by Equation 3.

[Equation 3]

$$U(x - a, y - b)$$

Equation 3 indicates a result obtained when $U(x,y)$, corresponding to a 3D point included in the 3D object, moves by a value of a on an x axis, and by a value of b on a y axis.

FIG. 7 illustrates a process of rotating a pixel included in an initial hologram pattern according to example embodiments.

It may be assumed that an initial hologram pattern 701 at a time of t, corresponding to a 3D object, is generated. An apparatus for generating a hologram may generate a transformation hologram pattern 702 by rotating a pixel included in the initial hologram pattern 701. A 3D hologram 703 based on the initial hologram pattern 701 at the time of t may be changed to a 3D hologram 704 based on the transformation hologram pattern 702 at a time of t + 1. Accordingly, the 3D object positioned in a center of a screen may be rotated on the screen. In other words, a displacement of a generated object may be adjusted as a result of adjusting an orientation of a pattern.

In FIG. 7, the process of generating the transformation hologram pattern 702 may be derived by Equation 4.

[Equation 4]

$$U(x\cos\theta + y\sin\theta, x\cos\theta - y\sin\theta)$$

Equation 4 indicates a result obtained when U(x,y), corresponding to a 3D point included in the 3D object, rotates by a value of θ. Accordingly, when the initial hologram pattern is rotated by a value of θ, the transformation hologram pattern 702 may be rotated by the value of θ and thus, the 3D object may be rotated by the value of θ.

According to exemplary embodiments, the 3D object may be moved and rotated simultaneously by combining the processes described with reference to FIGS. 4, 6, and 7. In addition, although the descriptions provided with reference to FIG. 4, 6, and 7 relate to 2D coordinates, the example may not be limited thereto and may be expanded to 3D coordinates. In this instance, a 3D hologram pattern may be used for the present disclosure.

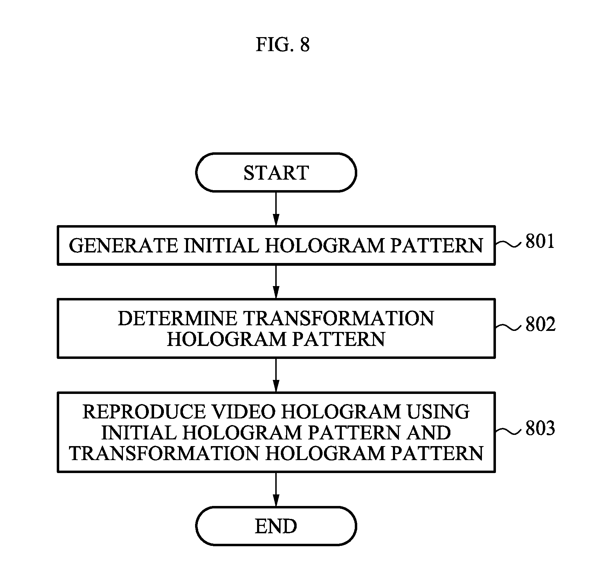

FIG. 8 illustrates a method of generating a hologram according to example embodiments.

In operation 801, an apparatus of generating a hologram may generate an initial hologram pattern corresponding to a 3D object in a 3D space. As an example, the hologram generating apparatus may generate a point hologram corresponding to a 3D point included in the 3D object, and may generate the initial hologram pattern using the generated point hologram.

In operation 802, the hologram generating apparatus may determine a transformation hologram pattern by transforming the initial hologram pattern.

As an example, the hologram generating apparatus may determine the transformation hologram pattern by changing a phase of a pixel included in the initial hologram pattern. As another example, the hologram generating apparatus may determine the transformation hologram pattern by changing a position of a pixel included in the initial hologram pattern. As still another example, the hologram generating apparatus may determine the transformation hologram pattern by rotating a pixel included in the initial hologram pattern.

In operation 803, the hologram generating apparatus may reproduce a video hologram using the initial hologram pattern and the transformation hologram pattern.

The methods according to the above-described embodiments may be recorded in non-transitory computer-readable media including program instructions to implement various operations embodied by a computer. The media may also include, alone or in combination with the program instructions, data files, data structures, and the like. The program instructions recorded on the media may be those specially designed and constructed for the purposes of embodiments, or they may be of the kind well-known and available to those having skill in the computer software arts. Examples of computer-readable media include magnetic media such as hard disks, floppy disks, and magnetic tape; optical media such as CD ROM disks and DVDs; magneto-optical media such as optical disks; and hardware devices that are specially configured to store and perform program instructions, such as read-only memory (ROM), random access memory (RAM), flash memory, and the like. The computer-readable media may also be a distributed network, so that the program instructions are stored and executed in a distributed fashion. The program instructions may be executed by one or more processors. The computer-readable media may also be embodied in at least one application specific integrated circuit (ASIC) or Field Programmable Gate Array (FPGA), which executes (processes like a processor) program instructions. Examples of program instructions include both machine code, such as produced by a compiler, and files containing higher level code that may be executed by the computer using an interpreter. The described hardware devices may be configured to act as one or more software modules in order to perform the operations of the above-described embodiments, or vice versa.

Although embodiments have been shown and described, it would be appreciated by those skilled in the art that changes may be made in these embodiments without departing from the principles of the disclosure, the scope of which is defined by the claims and their equivalents.

**Claims**

1.  An apparatus for generating a hologram, the apparatus comprising:

    a pattern generating unit to generate an initial hologram pattern corresponding to a three-dimensional (3D) object in a 3D space; and
    a pattern transformation unit to determine a transformation hologram pattern by transforming the generated initial hologram pattern.

2.  The apparatus of claim 1, wherein the pattern transformation unit determines the transformation hologram pattern by changing a phase of a pixel included in the initial hologram pattern.

3.  The apparatus of claim 1, wherein the pattern transformation unit determines the transformation hologram pattern by changing a position of a pixel included in the initial hologram pattern.

4.  The apparatus of claim 1, wherein the pattern transformation unit determines the transformation hologram pattern by rotating a pixel included in the initial hologram pattern.

5.  The apparatus of claim 1, wherein the pattern transformation unit determines the transformation hologram pattern by simultaneously applying a change in a phase and a change in coordinates to the initial hologram pattern.

6.  The apparatus of any of the preceding claims,
    wherein the pattern generating unit generates a point hologram corresponding to a 3D point included in the 3D object, and generates the initial hologram pattern using the generated point hologram, wherein the pattern generating unit preferably generates the point hologram using a fringe pattern generated based on a distance from a hologram plane to the 3D point included in the 3D object.

7.  The apparatus of any of the preceding claims, further comprising:

    a hologram reproducing unit to reproduce a video hologram using the initial hologram pattern and the transformation hologram pattern.

8.  A method of generating a hologram, the method comprising:

    generating an initial hologram pattern corresponding to a three-dimensional (3D) object in a 3D space; and
    determining a transformation hologram pattern by transforming the generated initial hologram pattern.

9.  The method of claim 9, wherein the determining comprises determining the transformation hologram pattern by changing a phase of a pixel included in the initial hologram pattern, wherein the determining preferably comprises determining the transformation hologram pattern by changing a position of a pixel included in the initial hologram pattern.

10. The method of claim 8, wherein the determining comprises determining the transformation hologram pattern by rotating a pixel included in the initial hologram pattern.

11. The method of claim 8, wherein the determining comprises determining the transformation hologram pattern by simultaneously applying a change in a phase and a change in coordinates to the initial hologram pattern.

12. The method of any of claims 8-11, wherein the generating comprises generating a point hologram corresponding to a 3D point included in the 3D object, and generating the initial hologram pattern using the generated point hologram, wherein the generating of the initial hologram pattern preferably comprises generating the point hologram using a fringe pattern generated based on a distance from a hologram plane to the 3D point included in the 3D object.

13. The method of any of claims 8-12, further comprising:

    reproducing a video hologram using the initial hologram pattern and the transformation hologram pattern.

14. A non-transitory computer-readable medium comprising a program for instructing a computer to perform the method of any of claims 8-13.

15. A method of generating a hologram, preferably a method as claimed in any of claims 8-14. the method comprising:

generating a fringe pattern;
generating a point hologram corresponding to a point in an object, using the fringe pattern;
generating an initial hologram pattern using the generated point hologram; and
determining a transformation hologram pattern by transforming the generated initial hologram pattern, , wherein transforming the generated initial hologram pattern preferably comprises changing at least one of a phase, position, and rotation of a pixel included in the initial hologram pattern and/or wherein the method preferably comprises:

reproducing a video hologram using the initial hologram pattern and the transformation hologram pattern.

FIG. 1

100

104

3D OBJECT

101
PATTERN GENERATING UNIT

102
PATTERN TRANSFORMATION UNIT

103
HOLOGRAM REPRODUCING UNIT

105

VIDEO HOLOGRAM

FIG. 2

201  POINT HOLOGRAM

202  HOLOGRAM PATTERN

203  3D HOLOGRAM

FIG. 3

FIG. 4

| HOLOGRAM PATTERN | → | ADJUST PHASE OF PATTERN | → | ADJUST DISPLACEMENT OF GENERATED OBJECT |

401        402

403        404

FIG. 5

## FIG. 6

| HOLOGRAM PATTERN | → | ADJUST POSITION OF PATTERN | → | ADJUST DISPLACEMENT OF GENERATED OBJECT |

601

602

603

604

## FIG. 7

| HOLOGRAM PATTERN | → | ADJUST ORIENTATION OF PATTERN | → | ADJUST DISPLACEMENT OF GENERATED OBJECT |
|---|---|---|---|---|

701

702

703

704

FIG. 8

```
                    ┌─────────────┐
                    │    START    │
                    └──────┬──────┘
                           │
                           ▼
        ┌──────────────────────────────────────┐
        │  GENERATE INITIAL HOLOGRAM PATTERN    │──~801
        └──────────────────┬───────────────────┘
                           │
                           ▼
        ┌──────────────────────────────────────┐
        │      DETERMINE TRANSFORMATION         │──~802
        │          HOLOGRAM PATTERN             │
        └──────────────────┬───────────────────┘
                           │
                           ▼
        ┌──────────────────────────────────────┐
        │   REPRODUCE VIDEO HOLOGRAM USING      │
        │   INITIAL HOLOGRAM PATTERN AND        │──~803
        │  TRANSFORMATION HOLOGRAM PATTERN      │
        └──────────────────┬───────────────────┘
                           │
                           ▼
                    ┌─────────────┐
                    │     END     │
                    └─────────────┘
```

Europäisches
Patentamt

European
Patent Office

Office européen
des brevets

## EUROPEAN SEARCH REPORT

**Application Number**

EP 13 15 1447

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | RITTER A ET AL: "HARDWARE-BASED RENDERING OF FULL-PARALLEX SYNTHETIC HOLOGRAMS", APPLIED OPTICS, OPTICAL SOCIETY OF AMERICA, WASHINGTON, DC; US, vol. 38, no. 8, 10 March 1999 (1999-03-10), pages 1364-1369, XP000823453, ISSN: 0003-6935, DOI: 10.1364/AO.38.001364 * the whole document * | 1-15 | INV. G03H1/08 |
| X | KABO I YA ET AL: "Computer synthesis of holograms of moving objects", SOVIET JOURNAL OF QUANTUM ELECTRONICS, AMERICAN INSTITUTE OF PHYSICS, NEW YORK, NY, US, vol. 1, no. 4, 1 January 1972 (1972-01-01), pages 425-428, XP002096749, ISSN: 0049-1748, DOI: 10.1070/QE1972V001N04ABEH003219 * the whole document * | 1-3,5-9, 11-15 | |
| | | | TECHNICAL FIELDS SEARCHED (IPC) |
| | | | G03H |

The present search report has been drawn up for all claims

| Place of search | Date of completion of the search | Examiner |
|---|---|---|
| Munich | 29 April 2013 | Noirard, Pierre |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

    .................................................................................

& : member of the same patent family, corresponding
    document

EPO FORM 1503 03.82 (P04C01)